# EUROPEAN PATENT APPLICATION

(11) **EP 2 451 006 A1**
(43) Date of publication of application: **09.05.2012**
(21) Application number: 10806163.1
(22) Date of filing: 05.03.2010
(51) Int. Cl.: H01Q 1/02, H01Q 1/24, H04M 1/02

(54) **PORTABLE RADIO**

(30) Priority: 05.08.2009 JP 2009182529
(71) Applicant: Panasonic Corporation, Kadoma-shi Osaka 571-8501 (JP)
(72) Inventor: KOSHINO, Yuichi, Chuo-ku, Osaka-shi Osaka 540-6207 (JP); KOYANAGI, Yoshio, Chuo-ku, Osaka-shi Osaka 540-6207 (JP); SATO, Noriyoshi, Chuo-ku, Osaka-shi Osaka 540-6207 (JP)
(74) Representative: Grünecker, Kinkeldey, Stockmair & Schwanhäusser
(86) International application number: PCT/JP2010/001533
(87) International publication number: WO 2011/016161

(57) **Abstract**

To provide, in a portable wireless device having a water-proof function, the portable wireless device which can prevent the deterioration of the performance of an antenna and also can avoid the mechanical breakage of a circuit part coupled to the antenna.

A portable wireless device having a casing 10 formed by assembling a first casing 11 and a second casing 12, includes an annular elastic member 13 sandwiched between the first casing 11 and the second casing 12, a flexible printed board 14 integrally formed with the annular elastic member 13 and disposed in a region surrounded by the annular elastic member 13, an antenna part 15 disposed on the flexible printed board 14, a circuit mounting part 19 disposed at the antenna part 15, and a circuit board 17 disposed in the region surrounded by the annular elastic member 13. A portion of the antenna part 15 is disposed along a portion of the annular elastic member 13. The circuit mounting part 19 is disposed on the inner side of the annular elastic member 13. The antenna part 15 and the ground part of the circuit board 17 are separated therebetween with a predetermined length or more.

## Description

### <Technical Field>

The present invention relates to a portable wireless device which can be utilized for a cellular phone, a personal digital assistance (PDA), a portable music player, a portable video game player, for example, and in particular relates to a structure for realizing an antenna and electric circuits accompanying therewith and a water proof function each housed within a casing.

### <Background Art>

The performance of an antenna for wireless communication largely depends on a distance between an antenna element and the ground. That is, each of the radiation resistance and the gain of the antenna reduce according to the reduction of the distance between the antenna element and the ground.

In a portable wireless device such as a cellular phone, since it is necessary to house many electric components etc. for realizing various kinds of functions within a small and thin casing, a printed board mounting electronic circuits thereon actually occupies most of the inner space of the casing. Further, a ground pattern is formed on the printed board. Thus, in the case of housing the antenna element within the casing, in order to prevent the reduction of the antenna gain, the antenna element is usually disposed near the end portion within the casing to thereby enlarge the distance between the antenna element and the ground pattern of the printed board.

In recent years, portable wireless devices have been demanded to have the water proof function. Thus, in order to prevent water from entering into portions such as the printed board within the casing from the outside of the casing, a member such as a water-proof packing is disposed at the end portion of the casing so as to surround the electric circuits such as the printed board.

However, when the water-proof packing is disposed at the end portion within the casing, the remaining space within the casing becomes narrow due to the packing. Thus, since the antenna element can not be disposed at the end portion of the casing, the antenna element is disposed on the inner side than the packing. As a result, the distance between the antenna element and the printed board becomes small and hence the characteristics of the antenna likely deteriorate.

A related technique concerning the portable wireless device having the water proof structure is disclosed in a patent literature 1, for example. The patent literature 1 discloses the configuration that a casing is configured by an upper casing and a lower casing, a water-proof packing of a frame type exists at a coupling portion between the upper casing and the lower casing, and an antenna element is buried within the water-proof packing.

Further, a related art of a multiantenna corresponding to a plurality of radio frequency bands is disclosed in a patent literature 2, for example. The patent literature 2 proposes to provide a cut portion at the center portion (position at a length M: length resonating at the second resonance frequency band (f2)) of an antenna pattern having an entire length L and resonating at the first frequency band (f1). The cut portion is provided on the linear portion of the antenna pattern. A passive element resonating at the second resonance frequency band is provided at the cut portion.

### <Prior Art Literature>

### <Patent Literature>

Patent Literature 1: JP-A-6-37876
Patent Literature 2: JP-A-2004-274267

### <Summary of Invention>

### <Problem that the Invention is to Solve>

However, according to the conventional technique disclosed in the patent literature 1, since only a linear element can be configured as an antenna element to be employed, the performance of the antenna becomes single resonant and a narrow band. Further, since the antenna element is buried within the water-proof packing, it is difficult to add circuit components for widening the band. If it is intended to improve the characteristics of the antenna by disposing any element at the inside of the water-proof packing formed in an annular shape and adding the circuit components, contact points increases. As a result, for example, the positions of the respective contact points vary at the time of manufacturing, and hence the quality of the antennas may vary. Further, since it is necessary to separately providing a circuit board, the structure becomes complicated and also the number of components increases.

Although the provision of the water-proof structure is not supposed in the patent literature 2, if the related technique of the patent literature 2 is applied in the case of providing the water-proof packing like the patent literature 1, the antenna element is inevitably disposed in a space on the inner side of the water-proof packing. Thus, since the distance between the antenna element and the ground pattern of the circuit board becomes short, the characteristics of the antenna degrade. Further, since the passive element exists at the center portion of the antenna element, when the antenna element is disposed at a position near the water-proof packing in order to separate the antenna element from the circuit board, the passive element is apt to be sandwiched by the casing and hence the passive element is likely broken.

An object of this invention is to provide a portable wireless device which has a water-proof function, can prevent the deterioration of the performance of an antenna and also can avoid the mechanical breakage of a circuit part coupled to the antenna.

### Means for Solving the Problems

The portable wireless device according to this invention is arranged in a manner that, in the portable wireless device having a casing formed by assembling a first casing and a second casing, the portable wireless device includes: an annular elastic member which is sandwiched between the first casing and the second casing; a flexible printed board which is integrally formed with the annular elastic member and disposed in a region surrounded by the annular elastic member; an antenna part which is disposed on the flexible printed board; a first electric circuit part which is disposed at the antenna part; and a circuit board which is disposed in the region surrounded by the annular elastic member, wherein a portion of the antenna part is disposed along a portion of the annular elastic member, the first electric circuit part is disposed inside of the annular elastic member, and the antenna part and a ground part of the circuit board are separated therebetween with a predetermined length or more.

According to this portable wireless device, since the flexible printed board is integrally formed with the annular elastic member for realizing the water-proof function, the antenna part can be disposed along the annular elastic member, that is, at the portion separated from the ground part of the circuit board within the casing. Thus, the degradation of the antenna performance can be prevented. Further, sine the first electric circuit part is disposed at the antenna part, it becomes possible to adjust the electrical length of the antenna and also adjust the resonance frequency characteristics.

Further, the portable wireless device according to this invention further includes a second electric circuit part which is disposed on the circuit board, wherein the first electric circuit part performs impedance matching between the antenna part and the second electric circuit part.

According to this portable wireless device, it is possible to perform the impedance matching between the antenna part and an electric circuit such as a wireless circuit.

Further, the portable wireless device according to this invention is arranged in a manner that the first electric circuit part controls an electrical length of the antenna part.

According to this portable wireless device, it is possible to match the resonance frequency of the antenna to a desired frequency without changing the physical length of the antenna part.

Further, the portable wireless device according to this invention is arranged in a manner that the first electric circuit part includes at least one of an inductance element, a capacitor element and a meander pattern.

According to this portable wireless device, the electrical length of the antenna part can be controlled by the reactance of the first electric circuit part. Further, when a resonance circuit is formed by coupling a plurality of elements in series or parallel, it is possible to constitute the antenna usable in plural frequency bands.

### <Advantageous Effects of Invention>

According to this invention, it is possible to provide a water-proof function, to prevent the deterioration of the performance of the antenna and to avoid the mechanical breakage of the circuit part coupled to the antenna.

### <Brief Description of Drawings>

Fig. 1 is a plan view showing the arrangement state of main constituent elements within the portable wireless device according to an embodiment of this invention.
Fig. 2 is a partially enlarged sectional diagram near an antenna part seen from a cut surface along a line A-A' in the portable wireless device shown in Fig. 1.
Fig. 3 is a partial plan view showing the detailed configuration near the line A-A' in the portable wireless device shown in Fig. 1.
Fig. 4 is an exploded perspective view showing the main constituent elements of the portable wireless device shown in Fig. 1.
Fig. 5 is a partially enlarged sectional diagram near an antenna feeding part seen from a cut surface along a line B-B' in the portable wireless device shown in Fig. 1.
Fig. 6 is a plan view showing the configuration a modified example 1 relating to the portable wireless device shown in Fig. 1.
Fig. 7 is a partially enlarged sectional diagram near an antenna feeding part seen from a cut surface along a line C-C' in the portable wireless device shown in Fig. 6.
Fig. 8 is a partial plan view showing the detailed configuration of the feeding part near the line C-C' in the portable wireless device shown in Fig. 6.
Fig. 9 is electric circuit diagrams showing concrete examples of a circuit component capable of being coupled to the antenna of the portable wireless device according to the embodiment of this invention.
Fig. 10 is a plan view showing a modified example a portion of the configuration of the portable wireless device shown in Fig. 1.

### <Mode for Carrying Out the Invention>

A portable wireless device according to an embodiment of this invention will be explained below with reference to drawings.

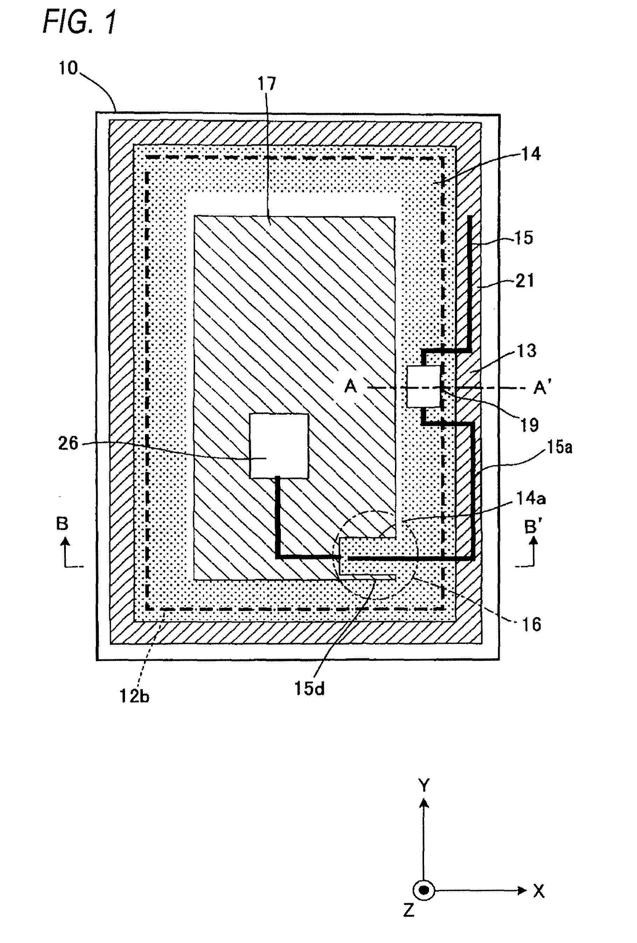

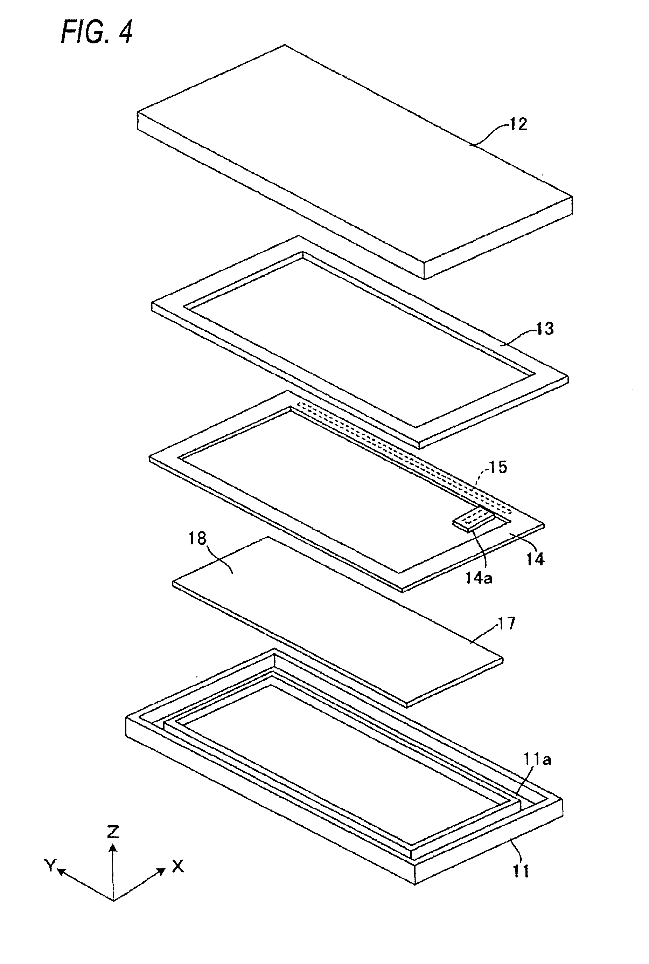

Fig. 1 is a schematic diagram showing the arrangement state of the main constituent elements within the portable wireless device according to the embodiment. Fig. 4 is a perspective view showing an example of the exploded state of the portable wireless device shown in Fig. 1. The portable wireless device shown in Fig. 1 is a cellular phone, for example, which mounts a wireless communication function and an antenna.

The casing 10 of the portable wireless device has a fixed shape which shape does not change and is configured by assembling, for example, fitting a first casing 11 and a second casing 12 shown in Fig. 4 in the thickness direction (Z-axis direction). The casing 10 houses, at the inner space thereof, a circuit board 17 mounting thereon an electric circuit part 18 (second electric circuit part) such as a wireless part, a flexible printed board 14 and an annular elastic member 13, as shown in Fig. 4. In fact, the annular elastic member 13 and the flexible printed board 14 are configured as a single component integrated by the one-piece molding.

For example, the annular elastic member 13 and the flexible printed board 14 can be integrated in a manner that the flexible printed board 14 formed in advance is attached to a predetermined mold, then material of the annular elastic member 13 in a fluid state is flown into the space within the mold and solidified.

An antenna part 15 formed as a printed pattern of metal (conductive material) (usually formed by processing a printed copper foil in a predetermined shape by the etching etc.) is mounted on the flexible printed board 14.

As shown in Figs. 1 and 4, the planar shape of each of the casing 10 and the circuit board 17 is a rectangle, for example. The circuit board 17 is housed at the inside of the annular elastic member 13 in the X-Y plane.

The flexible printed board 14 is formed in an annular shape in this embodiment so as to be able to surround the entire outer periphery of the circuit board 17. The contour of each of the outer periphery and the inner periphery of the flexible printed board 14 is formed in a shape close to a rectangle, for example. The contour of the inner periphery of the flexible printed board 14 is formed to be slightly larger than the outer periphery of the circuit board 17, whilst the contour of the outer periphery of the flexible printed board 14 is formed to be slightly larger than the contour of the inner periphery thereof. The size of the contour of the outer periphery of the flexible printed board 14 is set so as to be able to be housed in the inner space of the casing 10.

Thus, as shown in Fig. 1, the flexible printed board 14 can be disposed so as to follow the position near the outer periphery of the casing 10, and the circuit board 17 can be disposed at the inside of the inner periphery of the flexible printed board 14. The flexible printed board 14 is not necessarily configured to be an annular shape so as to surround the flexible printed board 14 but may be disposed only near a portion where the antenna part 15 is disposed.

The annular elastic member 13 is a member having elasticity, for example, rubber packing for realizing the water-proof function mainly. The annular elastic member 13 has an annular shape as its planar shape like the flexible printed board 14. Each of the inner periphery and the outer periphery of the annular elastic member 13 is formed in a rectangle shape in its planar shape, for example. The outer periphery of the annular elastic member 13 is larger than the outer periphery of the flexible printed board 14 and the size of the annular elastic member is formed so as to be able to be housed in the inner space of the casing 10.

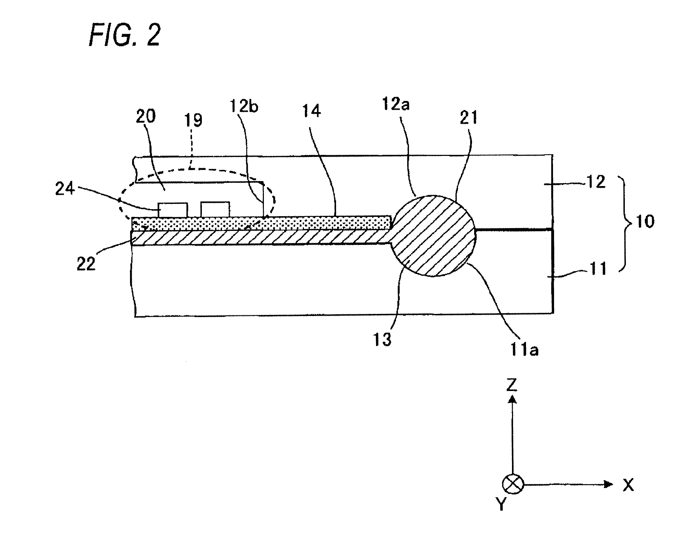

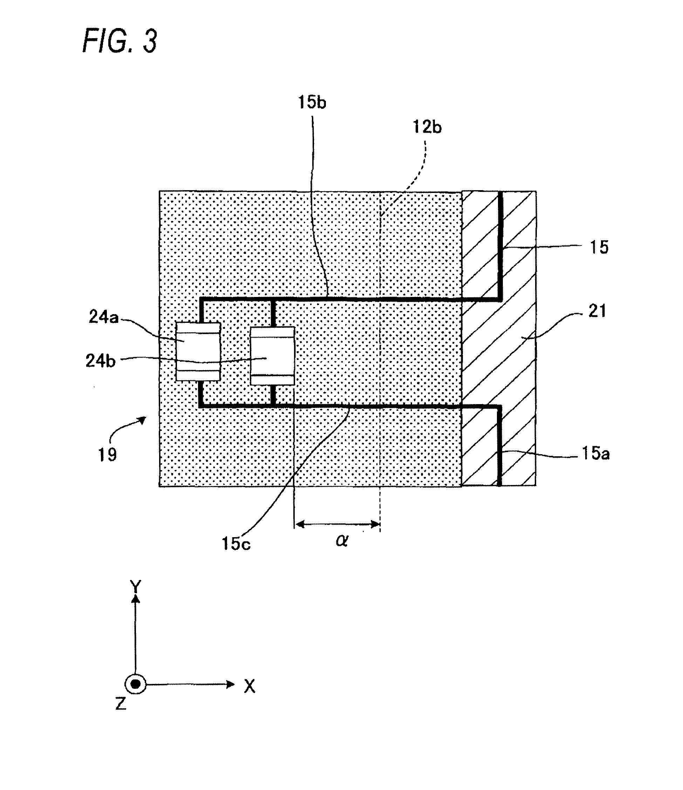

Fig. 2 is an enlarged constitutional sectional diagram along a line A-A' seen from the Y-axis direction in Fig. 1, and Fig. 3 is a partial plan view of a portion near the line A-A' seen from the Z-axis direction in Fig. 1. As shown in Fig. 2, an annular water-proof part 21 and an extension part 22 are integrally formed with the annular elastic member 13. The annular water-proof part 21 has a curved surface shape in which each of the upper end and the lower end thereof in the Z-axis direction protrudes at the center portion and has an almost elliptical shape in its section. The extension part 22 extends (is provided in an extended manner) from a portion of the annular water-proof part 21 toward the inner peripheral side, that is, in a direction toward the circuit board 17 and is formed in a flat-plate shape. The thickness of the annular water-proof part 21 is set to be sufficiently larger than the thickness of the extension part 22.

As shown in Fig. 2, the flexible printed board 14 is laminated on and fixed to the extension part 22 in the thickness direction. The end portion on the outer peripheral side of the flexible printed board 14 is disposed along the annular water-proof part 21. The flexible printed board 14 may be integrated with the annular elastic member 13 in a positional relation that a portion near the end portion on the outer peripheral side of the flexible printed board 14 is buried within the annular water-proof part 21.

In order to provide the water-proof function, that is, to eliminate a gap between the annular water-proof part 21 and the inner wall of the casing 10 for sandwiching the annular water-proof part 21 and apply a suitable pressing force, each of an elastic member holding part 11 a formed on the first casing 11 side and an elastic member holding part 12a formed on the second casing 12 side is formed as a concave part having a curved surface so as to follow the shape of the annular water-proof part 21. Each of the elastic member holding parts 11 a, 12a is formed in an annular shape so as to match to the shape and size of the annular elastic member 13.

As shown in Fig. 1, the antenna part 15 has an antenna pattern 15a which extends linearly along the Y-axis direction. A circuit mounting part 19 is coupled near the center of the antenna pattern 15a. The circuit mounting part 19 is a circuit element which is provided in order to adjust the electrical length of the antenna part 15 and adjust the resonance frequency characteristics of the antenna part 15.

As shown in Fig. 3, the circuit mounting part 19 is disposed on the flexible printed board 14 at a position shifted on the inner peripheral side (position close to the circuit board 17 (see Fig. 1)) than the antenna pattern 15a. The antenna pattern 15a is disposed at a position close to the outer peripheral side than the inner wall 12b of the casing 10. The circuit mounting part 19 is disposed at a position close to the inner peripheral side than the inner wall 12b. In order to prevent the breakage of the components of the circuit mounting part 19, the circuit mounting part 19 is desirably disposed at a position shifted on the inner peripheral side by α (for example, 0.5 mm) or more than the inner wall 12b.

Although the circuit mounting part 19 is disposed at the position closer to the ground part of the circuit board 17 as compared with the antenna pattern 15a in the configuration shown in Figs. 1 to 3, since only a part of the antenna becomes close to the ground part, the characteristics of the antenna scarcely degrades.

In the constitutional example shown in Fig. 3, the circuit mounting part 19 has two circuit components 24 (24a, 24b) coupled in parallel. Each of these circuit components is coupled to the antenna pattern 15a via wiring patterns 15b, 15c. In the circuit mounting part 19, the circuit components 24 are mounted on the flexible printed board 14 by the reflow soldering, for example. These circuit components 24 are disposed at positions not interfering with the inner wall of the casing 10, that is, within a casing inner space 20 as shown in Fig. 2.

A feeding part 16 shown in Fig. 1 is a coupling portion for electrically coupling a wireless part 26 on the circuit board 17 and the antenna part 15 on the flexible printed board 14. The feeding part 16 is disposed on the lower end side of the antenna part 15 in the example shown in Fig. 1. An extension part 14a formed so as to protrude on the inner peripheral side is provided at the flexible printed board 14 in the vicinity of the feeding part 16. A feeding pattern 15d coupled to the antenna pattern 15a is formed along the extension part 14a.

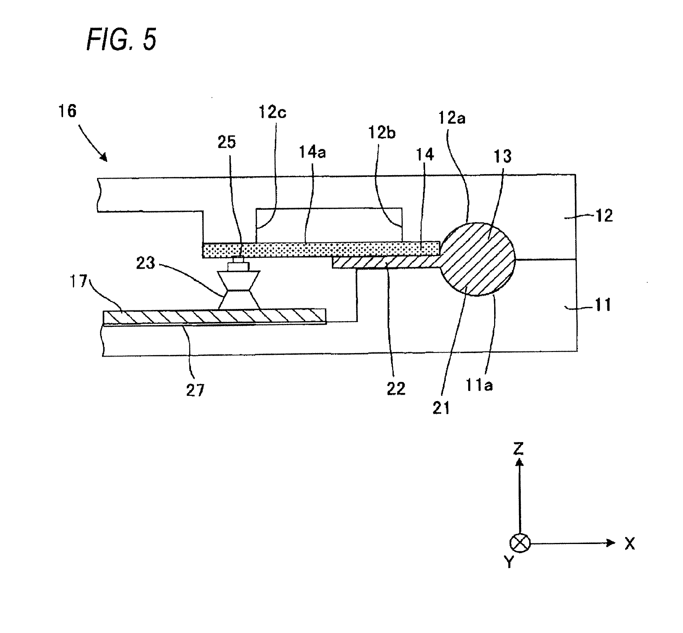

Fig. 5 (sectional diagram cut along a line B-B' in Fig. 1) shows the configuration near the feeding part 16. As shown in Fig. 5, at a portion near the tip end of the extension part 14a corresponding to the feeding part 16, the lower surface side of the flexible printed board 14 abuts against the upper end of a feeding member 23 and the upper surface side of the flexible printed board 14 abuts against the protrusion part 12c of the second casing 12. That is, in the vicinity of the feeding part 16, the flexible printed board 14 is sandwiched between the feeding member 23 and the second casing 12 in the thickness direction (Z-axis direction).

The feeding member 23 is constituted by conductive material and is fixed on the circuit board 17 in a state of being electrically coupled to a feeding land coupled to the wireless part 26 on the circuit board 17. The feeding land 25 is formed at a portion opposing to the tip end portion of the feeding member 23 on the lower surface of the flexible printed board 14 shown in Fig. 5. This feeding land 25 is coupled to the antenna pattern 15a (see Fig. 1) via the feeding pattern 15d. The electrode (land) on the major surface side of the flexible printed board 14 and the electrode on the rear surface side thereof are electrically coupled via a predetermined through hole. Thus, in the feeding part 16, the circuit on the circuit board 17 and the antenna part 15 on the flexible printed board 14 are electrically coupled according to the configuration shown in Fig. 5.

A ground pattern 27 is formed at a part of the surface area on the circuit board 17. When the antenna part 15 is configured so as to be separated as far as possible from the ground pattern 27, the radiation resistance of the antenna can be made large and the reduction of the gain can be prevented. In other words, as shown in Figs. 1 and 2, since the antenna part 15 is formed at the position along the annular water-proof part 21 of the annular elastic member 13, the distance between the antenna part 15 and the ground pattern 27 can be made large and the reduction of the antenna gain can be prevented. Further, since the circuit mounting part 19 (first electric circuit part) coupled to the antenna part 15 is provided on the flexible printed board 14, the frequency characteristics of the antenna part 15 can be adjusted. Since the circuit mounting part 19 is disposed on the inner peripheral side than the antenna part 15 and the annular water-proof part 21, the breakage of the components of the circuit mounting part 19 can be prevented without reducing the antenna gain.

The ground pattern of the circuit board 17 and the antenna part 15 are supposed to be disposed so as to be separated by almost several mm, for example, therebetween. Although this distance is limited by the size of the casing 10 and the size of the vacant space, it is necessary to determine the average distance to be 0.01 λ or more, for example, with respect to the wavelength λ of the radio frequency to be used. Preferably, the distance is determined almost to be in a range from 0.1 λ, to 0.2 λ.

### (Modified Example 1)

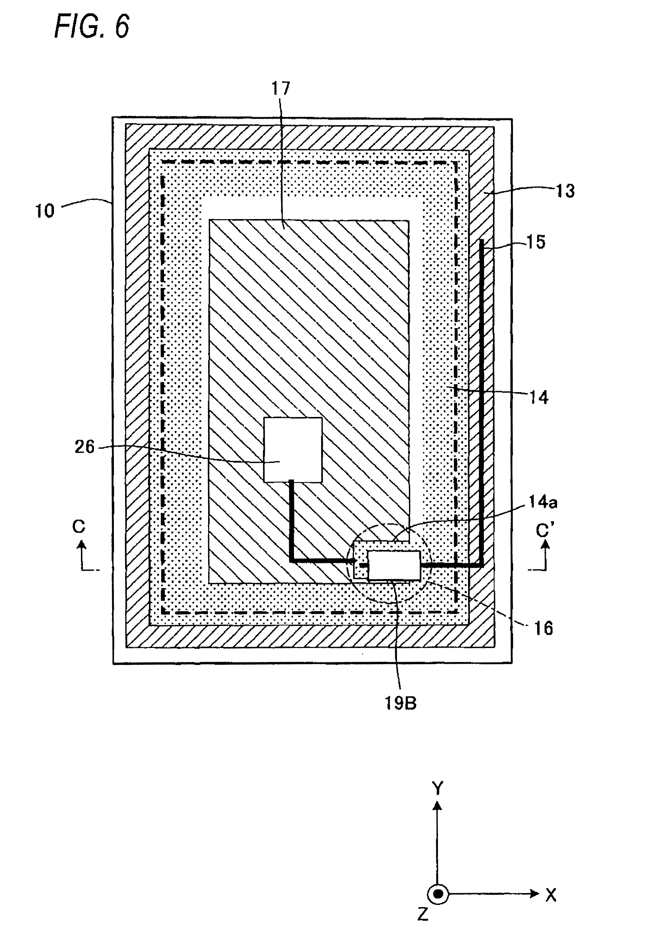

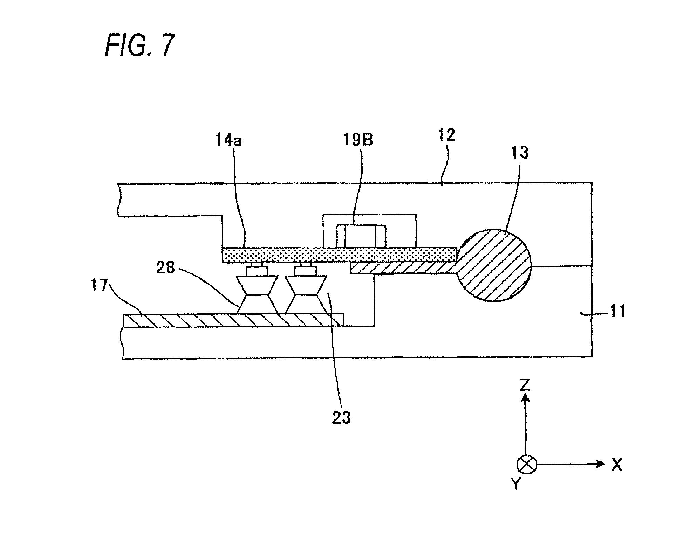

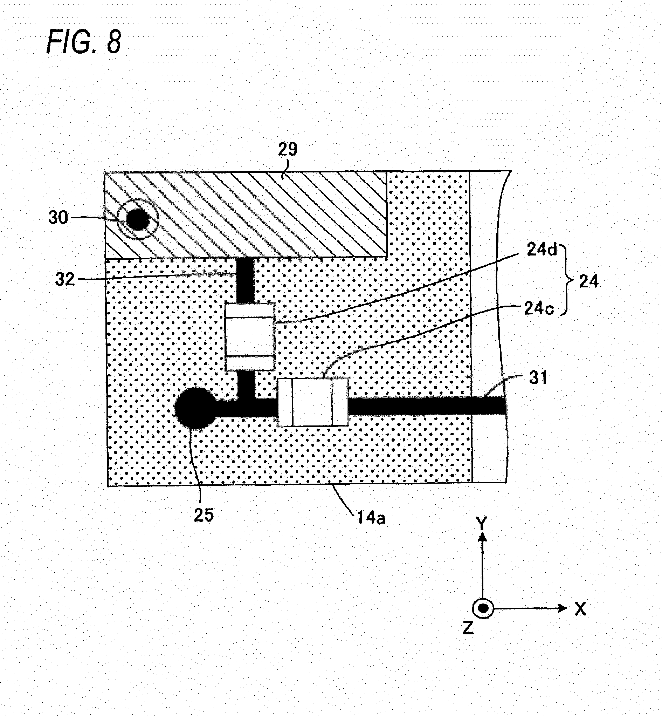

Fig. 6 is a diagram showing the configuration of the modified example 1 relating to the portable wireless device shown in Fig. 1. Fig. 7 is a sectional diagram showing the configuration near the feeding part along a line C-C' seen from the Y-axis direction in Fig. 6. Fig. 8 is a diagram showing an example of the detailed planar configuration near the feeding part. In Figs. 6 to 8, elements correspond to those of Figs. 1 to 5 are marked with the same references, respectively. In this case, the explanation will be mainly made as to modified configuration and added configuration in this modified example 1.

In the modified example 1, a circuit mounting part 19B is mounted on the flexible printed board 14 in place of the aforesaid circuit mounting part 19. The circuit mounting part 19B is disposed near the feeding part 16. The circuit mounting part 19B is a constituent element for performing the matching between the impedance of the electric circuit part 18 such as the wireless part 26 on the circuit board 17 and the impedance of the antenna part 15 on the flexible printed board 14. In the constitutional example shown in Figs. 6 to 8, the circuit mounting part (first electric circuit part) 19 like the configuration of Figs. 1 to 5 may be further added near the center of the antenna part 15.

The circuit mounting part 19B has two circuit components 24(24c, 24d) as shown in Fig. 8. A ground pattern 29 and a grounding land 30 are further formed in addition to the feeding land 25 near the tip end of the extension part 14a of the flexible printed board 14. The ground pattern 29 is formed by a printed conductive pattern, for example, like the antenna part 15 and electrically coupled to the grounding land 30.

The circuit component 24c of the circuit mounting part 19B is electrically coupled at its one end to the antenna part 15 via a wiring pattern 31 and also electrically coupled at its the other end to the feeding land 25. The circuit component 24d of the circuit mounting part 19B is electrically coupled at its one end to the feeding land 25 and also electrically coupled at its the other end to the grounding land 30 via the ground pattern 29.

As shown in Fig. 7, a conductive member 28 together with the feeding member 23 are mounted on the circuit board 17. The conductive member 28 is electrically coupled to the ground pattern 27 on the circuit board 17 and fixed on the circuit board 17. The grounding land 30 is formed at the position opposing to the conductive member 28.

Thus, in a state where the respective constituent elements are assembled as shown in Fig. 7, the flexible printed board 14 is sandwiched between the first casing 11 and the second casing 12 of the casing 10, the feeding member 23 is electrically coupled to the feeding land 25 and the conductive member 28 is electrically coupled to the grounding land 30. Thus, the circuit mounting part 19B including the circuit components 24c, 24d is coupled between the wireless part 26, the ground and the antenna part 15. Therefore, the impedance matching can be performed.

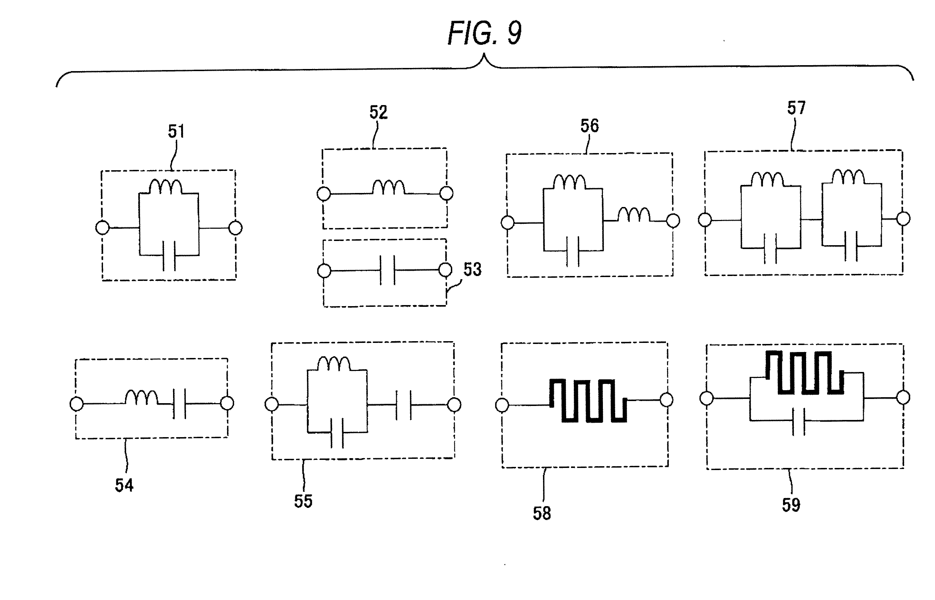

Concrete circuit components 51 to 59 usable as the aforesaid circuit components 24 (24a, 24b, 24c, 24d) are shown in Fig. 9 as an example. Each of these circuit components 51 to 59 shown in Fig. 9 will be explained briefly.

The circuit component 51 is configured by coupling a single inductor (electric coil) and a single capacitor in parallel. Since the circuit component 51 constitutes a parallel resonance circuit, it is possible to constitute the antenna usable in plural frequency bands by adjusting the resonance frequency characteristics of the antenna part 15.

The circuit component 52 is configured by a single inductor, and the circuit component 53 is configured by a single capacitor. The electrical length of the antenna part 15 and the resonance frequency characteristics of the antenna part 15 can be adjusted by coupling the circuit component 52 or the circuit component 53 to the antenna part 15.

The circuit component 54 is configured by serially coupling a single inductor and a single capacitor. Since the circuit component 54 constitutes a series resonance circuit, it is possible to constitute the antenna usable in plural frequency bands by adjusting the resonance frequency characteristics of the antenna part 15.

The circuit component 55 is configured by coupling a single inductor and a single capacitor in parallel and further coupling a single capacitor in series thereto. The circuit component 56 is configured by coupling a single inductor and a single capacitor in parallel and further coupling a single inductor in series thereto. The circuit component 57 is configured by coupling two parallel resonance circuits in series each of which is configured by coupling a single inductor and a single capacitor in parallel.
Since each of the circuit components 55, 56, 57 constitutes the parallel resonance circuit, it is possible to constitute the antenna usable in plural frequency bands by adjusting the resonance frequency characteristics of the antenna part 15.

The circuit component 58 is provided with a meander pattern formed in a zigzag fashion as a single element. Since the meander pattern has a reactance, it can be used for a usage like those of other passive elements such as an inductor and a capacitor.

The circuit component 59 is configured by coupling a single element constituted of a meander pattern and a capacitor in parallel. Since the circuit component 59 is constituted as a parallel resonance circuit, it can be utilized to realize the antenna usable in plural frequency bands by adjusting the resonance frequency.

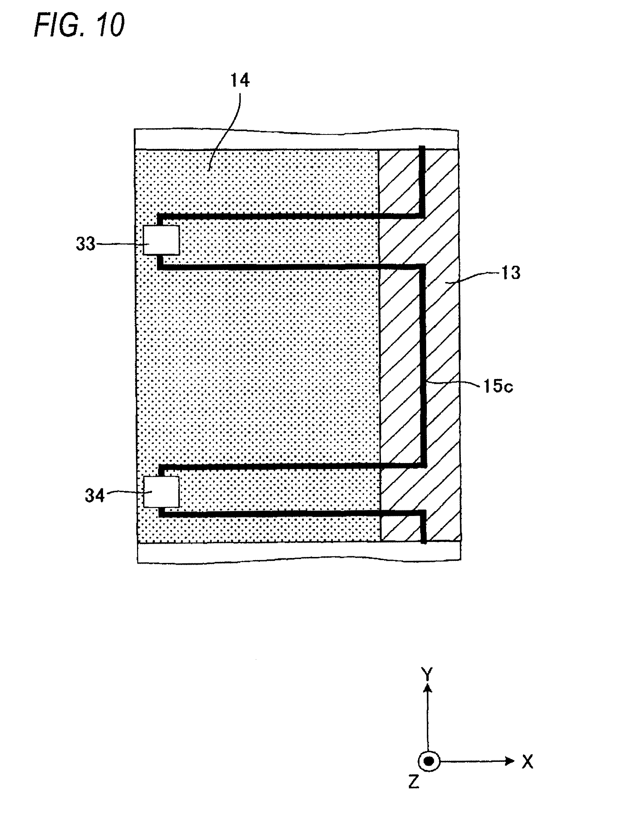

In the constitutional example shown in Figs. 1 to 3, although the single circuit mounting part 19 is coupled to only one portion on the antenna part 15, a plurality of the circuit mounting parts 19 may be coupled to the antenna part 15. For example, in a constitutional example shown in Fig. 10, two circuit mounting parts 33, 34 are coupled at different portions on an antenna part 15C. When the circuit mounting parts 33, 34 are coupled at the plural portions in this manner, it is possible to realize the antenna which is usable in a wider band as compared with the case where the circuit mounting part is coupled only to the single portion.

According to the portable wireless device of this embodiment, since the flexible printed board 14 is integrally formed with the annular elastic member 13 for realizing the water-proof function, the antenna part 15 can be disposed along the annular elastic member 13, that is, at the portion separated from the ground part of the circuit board 17within the casing. Thus, the degradation of the antenna performance can be prevented. Further, sine the circuit mounting parts 19,19B are disposed at the antenna part 15, it becomes possible to adjust the electrical length of the antenna and also adjust the resonance frequency characteristics, for example.

Although it is supposed that this embodiment employs the casing 10 which shape does not change, there are many cases that the portable wireless device such as a cellular phone employs the casing 10 which shape can be changed due to an opening/closing or sliding operation. The deformable casing is configured in a manner that an upper casing and a lower casing provided independently are coupled via a hinge etc.. for example. In the case of employing such the deformable casing, it is also possible to suppose the configuration that the circuit board 17 mounting a wireless circuit thereon is housed within one of the upper casing and the lower casing, and the flexible printed board 14 including the antenna part 15 and the annular elastic member 13 are housed within the other casing.

Although this invention has been explained in detail and with reference to the particular embodiments, it will be apparent for those skilled in the art that the embodiment can be changed and modified in various ways without departing from the spirit and scope of this invention.
This application is based on Japanese Patent Application No. 2009-182529 filed on August 5, 2009, the contents of which is hereby incorporated by reference into this application.

### <Industrial Applicability>

This invention is useful for a portable wireless device etc. which has a water-proof function, can prevent the deterioration of the performance of an antenna and also can avoid the mechanical breakage of a circuit part coupled to the antenna.

### <Explanation of Signs>

- 10: casing
- 11: first casing
- 12: second casing
- 11a, 12a: elastic member holding part
- 12b: inner wall
- 12c: protrusion part
- 13: annular elastic member
- 14: flexible printed board
- 15: antenna part
- 16: feeding part
- 17: circuit board
- 18: electric circuit part
- 19: circuit mounting part
- 20: casing inner space
- 21: water-proof part
- 22: extension part
- 23: feeding member
- 24: circuit component
- 25: feeding land
- 26: wireless part
- 27: ground pattern
- 28: conductive member
- 29: ground pattern
- 30: grounding land
- 31, 32: wiring pattern
- 33, 34: circuit mounting part
- 51-59: circuit component

## Claims

1. A portable wireless device having a casing formed by assembling a first casing and a second casing, the portable wireless device comprises:
an annular elastic member which is sandwiched between the first casing and the second casing;
a flexible printed board which is integrally formed with the annular elastic member and disposed in a region surrounded by the annular elastic member;
an antenna part which is disposed on the flexible printed board;
a first electric circuit part which is disposed at the antenna part; and
a circuit board which is disposed in the region surrounded by the annular elastic member,
wherein a portion of the antenna part is disposed along a portion of the annular elastic member,
the first electric circuit part is disposed inside of the annular elastic member, and the antenna part and a ground part of the circuit board are separated therebetween with a predetermined length or more.

2. The portable wireless device according to claim 1, further comprising:
a second electric circuit part which is disposed on the circuit board, wherein
the first electric circuit part performs impedance matching between the antenna part and the second electric circuit part.

3. The portable wireless device according to claim 1, wherein the first electric circuit part controls an electrical length of the antenna part.

4. The portable wireless device according to one of claims 1 to 3, wherein the first electric circuit part includes at least one of an inductance element, a capacitor element and a meander pattern.
